# EUROPEAN PATENT APPLICATION

(11) **EP 2 523 073 A1**
(43) Date of publication of application: **14.11.2012**
(21) Application number: 11165369.7
(22) Date of filing: 09.05.2011
(51) Int. Cl.: G06F 3/033

(54) **Surface mountable navigation device with tactile response**

(71) Applicant: Research In Motion Limited, Waterloo, ON N2L 3W8 (CA)
(72) Inventor: Los, Oleg, Rolling Meadows, 60008 (US)
(74) Representative: Fennell, Gareth Charles

(57) **Abstract**

A surface mountable navigation device with tactile response includes a flexible coupling component and a navigation sensor. The flexible coupling component can be a flexible printed circuit having a first end and a second end. The flexible coupling component can be folded at least partially on itself so that the first end is above the second end. The first end of the flexible coupling component can be coupled to the navigation sensor. The second end of the flexible coupling component can be coupled to a circuit board of an electronic device. The second end can have a plurality of conductor pads adapted to electrically couple the navigation sensor to the circuit board. As the flexible coupling component can be folded onto itself, the navigation device requires less space within the interior of the electronic device.

## Description

### FIELD OF TECHNOLOGY

The present disclosure generally relates to electronic devices, and more specifically relates to a surface mountable navigation device with tactile response.

### BACKGROUND

Electronic devices are becoming more prevalent and more advanced. Electronic devices can include, but are not limited to, cellular telephones, smart telephones, wireless personal digital assistants (PDAs), and laptop computers with wireless 802.11 or Bluetooth capabilities. These devices can run on a wide variety of networks from data-only networks such as Mobitex^{®} and DataTAC^{®} networks to complex voice and data networks such as GSM/GPRS, CDMA, EDGE, UMTS and CDMA2000 networks. As the technology associated with electronic devices continues to advance, users of these electronic devices are becoming more reliant on these electronic devices. Therefore, attempts are being made to make the electronic devices easier to use. In an effort to further those efforts, many technological advances are being made with respect to navigation tools. For example, many conventional electronic devices used track wheels to navigate items displayed on the display of the electronic device. At one point, track wheels were replaced with track balls or navigation pads, and these were incorporated into electronic devices.

Currently, navigation devices, such as navigation pads and jog balls, are becoming more popular. Navigation devices can provide navigation in two or three directions or axes, such as the x-direction (or x-axis), y-direction (or y-axis) and z-direction (or z-axis). Navigation devices can provide user inputs to a processor which can allow a user to navigate among items displayed on the display of an electronic device, select an item displayed on the display of an electronic device, or both. Conventional navigation devices use a flexible coupling component to communicatively couple a navigation sensor and a printed circuit board in order to control navigation among items displayed on the display screen of the electronic device. Due to length of these flexible coupling components, the entire assembly takes up more space on the printed circuit board than is ideal. Specifically, due to the length of the flexible coupling component, the electronic device as a whole cannot be built as compactly as is desired. Additionally, due to the customized nature of the manufacturing of the flexible coupling components, the lengths can be imprecise and can vary from device to device. This imprecision makes it difficult to always accurately connect the flexible coupling component to the printed circuit board. The navigation device of the present disclosure will allow for a common design across different suppliers and products. As such, assembly time and manufacturing costs will be reduced. Additionally, as it is considered desirable to manufacture an electronic device that is smaller and therefore more easily hand cradleable, the ability to shave even a fraction of a millimeter off of any one dimension without sacrificing functionality of the electronic device is very advantageous.

### BRIEF DESCRIPTION OF THE DRAWINGS

Implementations of the present technology will now be described, by way of example only, with reference to the attached figures, wherein:

Figure 1 is a cross section view of a navigation module for an electronic device in accordance with an exemplary implementation;

Figure 2 is an exploded view of a navigation module for an electronic device in accordance with an exemplary implementation;

Figure 3 is a view of a bottom a navigation module for an electronic device in accordance with an exemplary implementation;

Figure 4 is an exploded view of a navigation module for an electronic device in accordance with an exemplary implementation;

Figure 5 is a front view of an electronic device having a navigation tool in accordance with an exemplary implementation.

### DETAILED DESCRIPTION

For simplicity and clarity of illustration, where appropriate, reference numerals have been repeated among the various different figures to indicate corresponding or analogous elements. In addition, numerous specific details are set forth in order to provide a thorough understanding of the embodiments described herein. However, those of ordinary skill in the art will understand that the embodiments described herein can be practiced without each of these specific details. In other instances, methods, procedures and components may not have been described in great detail so as not to obscure the related relevant feature being described therein. Also, the description is not to be considered as limiting the scope of the embodiments described herein.

Several definitions that apply throughout this disclosure will now be presented. The word "coupled" is defined as connected, whether directly or indirectly through intervening components, and is not necessarily limited to physical connections. The term "communicatively coupled" is defined as connected whether directly or indirectly through intervening components, is not necessarily limited to a physical connection, and allows for the transfer of data. The term "electronic device" is defined as any electronic device that is capable of at least accepting information entries from a user and includes the device's own power source. A "wireless communication" means communication that occurs without wires using electromagnetic radiation. The term "memory" refers to transitory memory and non-transitory memory. For example, non-transitory memory can be implemented as Random Access Memory (RAM), Read-Only Memory (ROM), flash, ferromagnetic, phase-change memory, and other non-transitory memory technologies.

The present disclosure describes a surface mountable navigation device with tactile response for an electronic device. The navigation device can include a flexible coupling component with a first end being coupled to a navigation sensor and a second end being coupled to a flexible coupling component. The flexible coupling component can be coupled to a circuit board, thereby connecting the navigation sensor to the circuit board. The flexible coupling component can be a flexible circuit; for example, a flexible printed circuit. The flexible coupling component can be folded at least partially on itself so that the first end is above the second end. In at least one implementation, a depressible switch can be coupled to the flexible coupling component and can be located between a vertical alignment of the first end and the second end. By folding the flexible coupling component at least partially on itself, the size of the entire navigation assembly will be reduced and the assembly will be less costly to manufacture. In addition, the navigation device can be shorter in the z-direction or z-axis than conventional navigation devices for electronic devices, which can result in an overall slimmer profile for the electronic device.

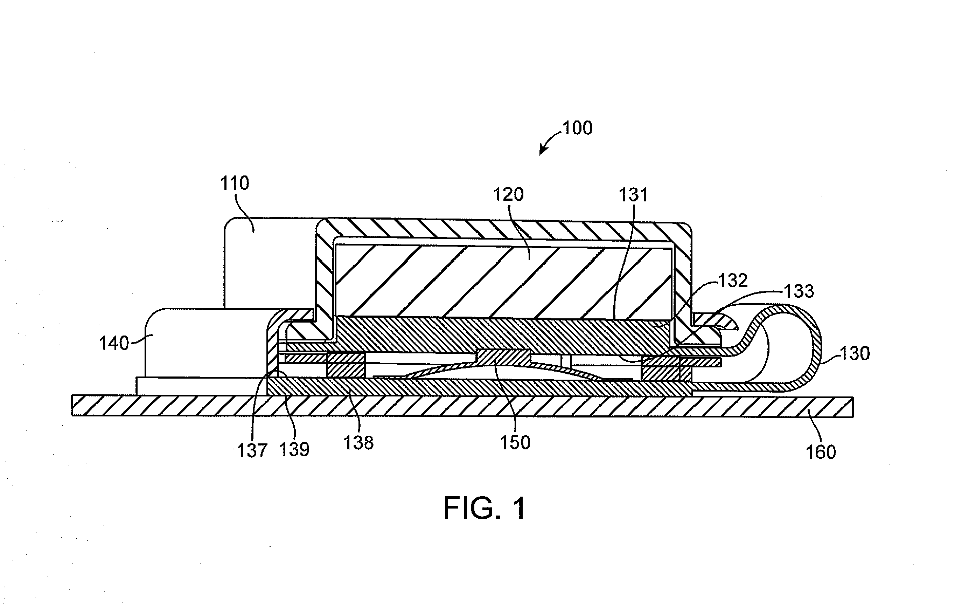

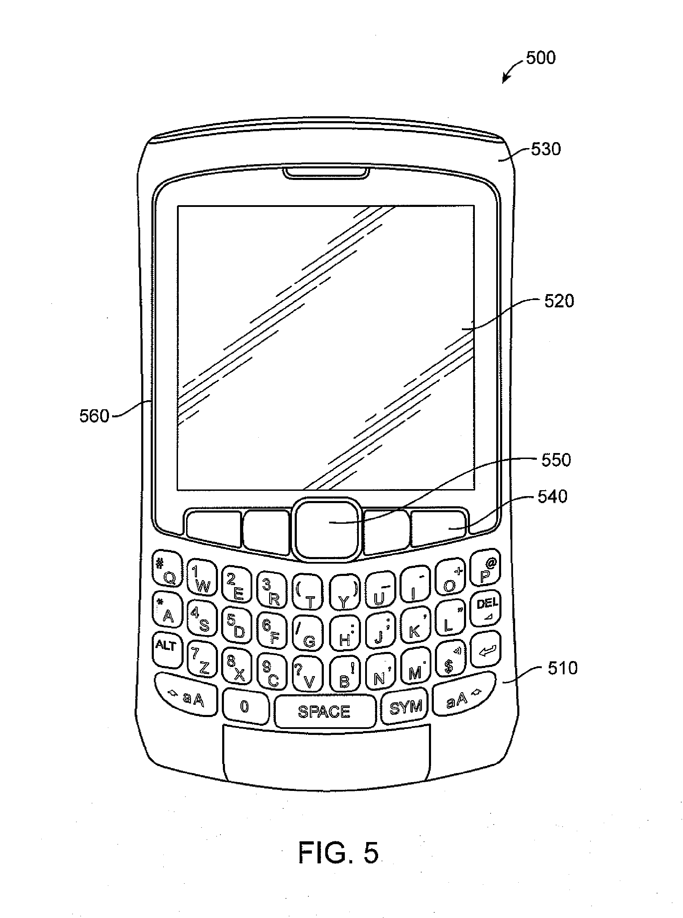

Figure 1 is a view of a cross-section of navigation device 100 for an electronic device 500 (shown in Figure 5), in accordance with an exemplary implementation. The illustrated navigation device 100 is an optical trackpad. However, one of ordinary skill in the art will appreciate that the optical navigation device 100 can also be an optical trackball, an electro-mechanical trackpad, an electro-mechanical jogball, an optical jogball, a user input device a navigation keypad, or other optical or electro-mechanical navigational tool at which inputs can be received and signals can be output to perform functions on information displayed on the display screen of the electronic device 500. In yet other implementations, the navigation device 100 can also include a fingerprint sensor, where the navigation sensor can provide for fingerprint ID and navigation. In the illustrated implementation, the navigation device 100 can include a cover 110, a navigation sensor 120, a flexible coupling component 130 having a first end 132 and a second end 138, a shield 140, a depressible switch 150, and a circuit board 160. The circuit board 160 can be a rigid circuit board, a plastic circuit board, a flexible circuit board, or other structure that enables electronic communication between the navigation device 100 and a processor (not shown) of the electronic device. In Figure 1, the flexible coupling component 130 is a flexible printed circuit that is capable of being folded. In other implementations, the flexible coupling component 130 can be a flexible circuit tail, a, or a flexible substrate having circuitry adhered thereon, anisotropic conductive film, or other flexible coupling component that can be folded, such as for example even folded onto itself. The first end 132 of the flexible coupling component 130 can have an upper surface 131 and a lower surface 133. Similarly, the second end 138 of the flexible coupling component 130 can also have an upper surface 137 and a lower surface 139.

As illustrated in Figure 1, the flexible coupling component 130 can communicatively couple the navigation device 100 to the circuit board 160. However, in other implementations, flexible coupling component can communicatively couple the navigation device 100 to a support structure, or an intervening component between the navigation device 100 and the circuit board 160. In the exemplary implementation of the present disclosure, shown in Figure 1, the flexible coupling component 130 is folded on itself so that the navigation device 100 is held in a substantially vertical position with respect to the rigid circuit board 160. More specifically, the first end 132 of the flexible coupling component 130 can have an upper surface 131 and a lower surface 133, and the second end 138 of the flexible coupling component 130 can have an upper surface 137 and a lower surface 139. When the flexible coupling component 130 is folded on itself as noted above, the lower surface 133 of the first end 132 faces the upper surface 137 of the second end 138, such that the lower surface 133 of the first end 132 is held in a substantially parallel manner with the upper surface 137 of the second end 138. In at least one implementation, the second end 138 of the flexible coupling component 130 can include at least one conductive member (not shown). The conductive member can provide the electronic coupling of the navigation device 100 to the circuit board 160.

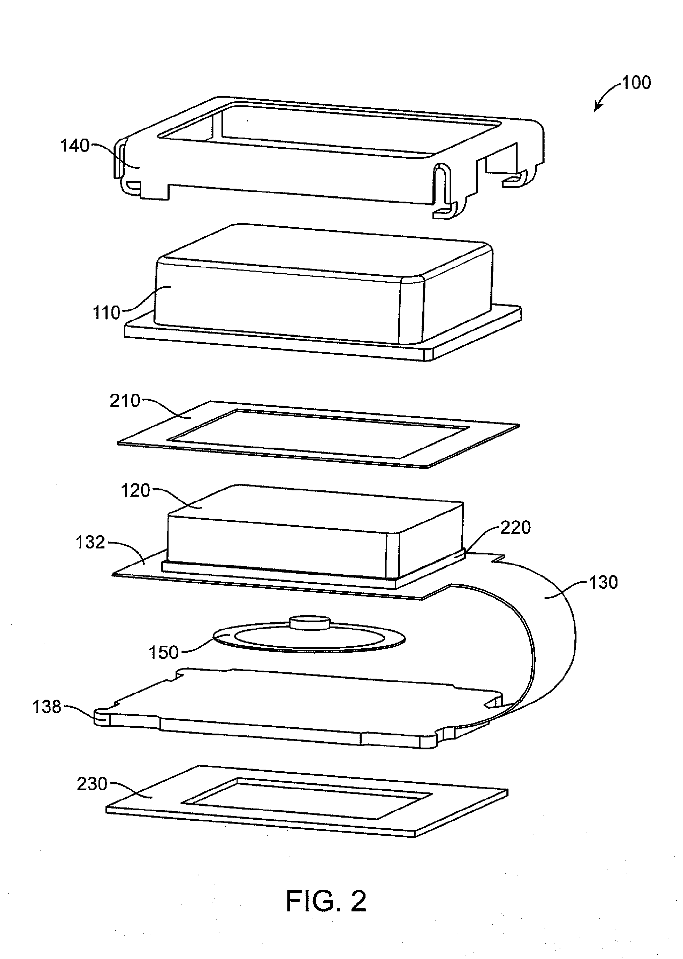

Still referring to Figure 1, the depressible switch 150 can be built into the navigation device 100. For example, the depressible switch 150 can be located between a vertical arrangement of the first end 132 and the second end 138 of the flexible coupling component 130, thereby sealing the depressible switch 150 from contaminants. In other implementations, the depressible switch 150 can be located beneath circuit board 160 (as shown in Figure 2). The depressible switch 150 is movable in the z-direction, thereby providing a tactile feedback in the event the navigation tool 100 is pressed or actuated in the z-direction. For example, the tactile feedback can be a "click." The depressible switch 150 can further provide an input to the electronic device 500 in response to an application of pressure to the top surface of the navigation device 100.

While Figure 1 illustrates a depressible switch 150, those of ordinary skill in the art will appreciate that the depressible switch 150 can be optionally included. In such an embodiment, the navigation device 100 can be moveable in the z-direction. In at least one implementation, when the navigation device 100 is pressed in the z-direction, the second end 138 of the flexible coupling component 130 can contact a rigid support structure (for example, the circuit board 160) thereby providing a tactile feedback. The second end 138 of the flexible coupling component 130 can include a capacitor pad of a capacitive switch. When the navigation device 100 is pressed in the z-direction, the capacitor pad can contact a corresponding capacitor pad on the circuit board 160, thereby closing the capacitive switch to send a signal to a processor of the electronic device. For example, a signal indicative of a user input. Therefore, the contact between the navigation device 100 and the rigid circuit board 160 provides a tactile input, and in at least one implementation, the utilization of a capacitive switch can provide an additional mechanism for entering inputs at the navigation device 100.

Figure 2 illustrates an exploded view of an exemplary navigation device 100. In at least the implementation of the navigation device 100 illustrated in Figure 2, the assembly of the navigation device 100 includes a cover 110, a navigation sensor 120, a flexible coupling component 130, a shield 140, a depressible switch 150, and a rigid circuit board 160. A top adhesive 210, a stiffener 220, and a bottom adhesive 230 can couple the aforementioned components together; however in other implementations, the components can be welded together, soldered together, snapped together, pinned together, or coupled together by other coupling mechanisms. In particular, in Figure 2, the top adhesive 210 is positioned between the cover 110 and the sensor 120. The stiffener 220 is placed between the sensor and the flexible coupling component 130. The bottom adhesive 230 is placed beneath the circuit board 150. However, in other implementations, the top adhesive 210, the stiffener 220, and the bottom adhesive 230 can be positioned between other components, then as shown in Figure 2. Additionally, fewer or more adhesives and stiffeners can be implemented than as illustrated, including no adhesives and no stiffeners.

As illustrated in Figure 2, the navigation device 100 can include a cover 110. In at least one implementation, the cover 110 can include an LED, an LCD, or other light source. The light source can display information or can provide lighting in low-light conditions. For example, the light source can display the function that will be input by a z-direction actuation of the navigation device 100.

As illustrated in Figure 2, the navigation device 100 can include a shield 140. The shield 140 can comprise a material that can protect the device from electro-static discharge (ESD). For example, the shield 140 can comprise a material that is at least one of EMF shielded or RF shielded.

The assembly of the navigation device 100 can provide a barrier which can assist in preventing foreign material, such as dust, water, debris, or other contaminants, from entering the electronic device 500. For example, the assembly of the navigation device 100 can protect the internal components of the electronic device from foreign material that might otherwise enter through openings between the navigation device 100 and an aperture of a front housing (not shown) of the electronic device 500 through which the navigation device 100 extends.

Also in Figure 2, a depressible switch 150 can be positioned beneath the circuit board 160. However, in other implementations, the depressible switch 150 can be placed between a vertical alignment of the first end 132 and the second end 138 of the flexible coupling component 130, between the second 138 of the flexible coupling component and the circuit board 160, or elsewhere in the assembly such that the depressible switch150 can be actuated when the navigation device 100 is actuated.

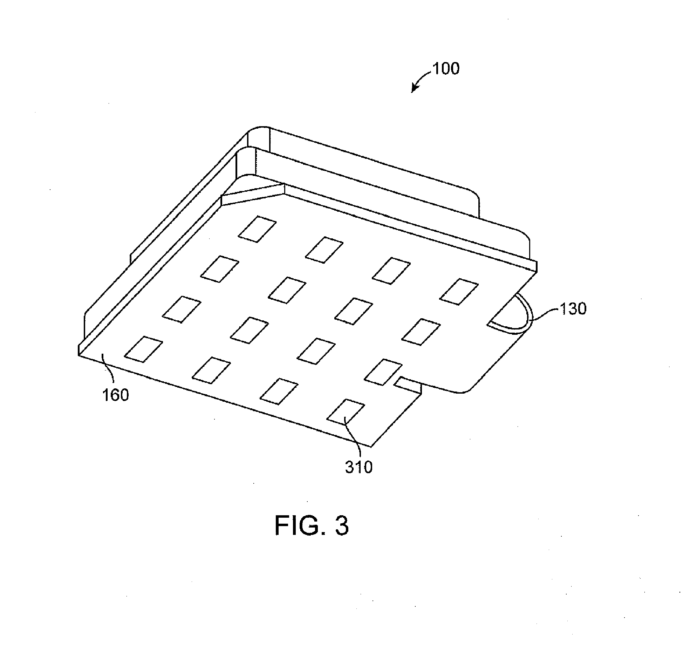

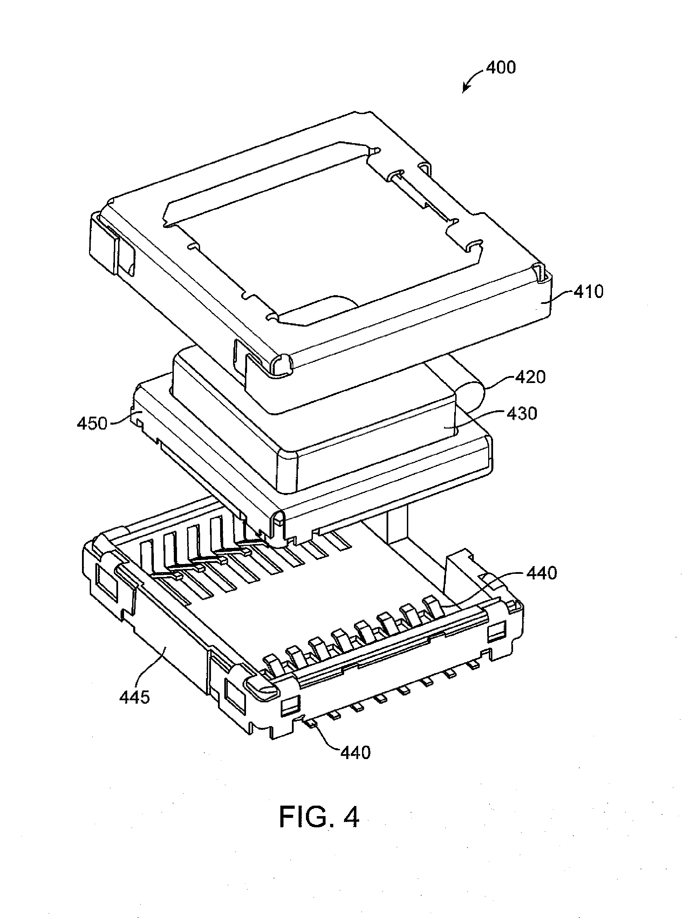

Figure 3 is a view of a bottom of an exemplary navigation device 100. In at least one implementation of the navigation device 100 of the present disclosure, the first end 132 of the flexible coupling component 130 can be coupled to the navigation sensor 120 , while the second end 138 of the flexible coupling component 130 can be connected to a rigid circuit board 160. As illustrated in Figure 3, the second end 138 of the flexible coupling component 130 can include a plurality of conductive members 310. For example, the conductive member 310 can be conductor pads, such as gold-plated pads. In the illustrated implementation, each flexible conductive member 310 is coupled to an underside of the second end of the flexible coupling component 130. In at least one implementation, the conductor member 310 can be integrated into the second end 138 of the flexible coupling component 130, while in other implementations, the conductor members 310 soldered, adhered, or otherwise coupled to the second end 138. The illustrated conductive members 310 are gold or another gold-plated substance, but can also comprise other materials that allow for the electrical coupling between the navigation sensor 120 and a processor (not shown) of the electronic device 500. In other implementations, the conductive members 310 can be a recess, a conductive strip, a protuberance, or other conductive coupling device that allows for the electrical coupling between the navigation sensor 120 to a circuit board 160 or a processor of the electronic device 500. In other implementations, the second end 138 of the flexible coupling component can be coupled to the circuit board 160 by an intervening attachment mechanism. Figure 4 illustrates such an implementation.

Figure 4 is an exploded view of another implementation of the navigation device 400. In Figure 4, the first end (not shown) of the flexible coupling component 420 can be coupled to the navigation sensor 430 and the second end (not shown) can be coupled to an attachment mechanism 445. The attachment mechanism 445 is an open box-like structure or housing. The open box-like structure comprises twelve pins 440 to provide the electrical connection between the navigation sensor 430 and a circuit board of an electronic device. For example, the twelve pins 440 can adapted to electrically couple conductive member (for example conductor pads) of the second end of the flexible coupling component 420 to conductive contacts of a circuit board (not shown), thereby providing a connection for the electrical communication between the navigation sensor 430 and a processor of the electronic device. While the illustrated implementation shows twelve pins 440, those of skill in the art will appreciate that fewer or more pins can be implemented than as shown. Additionally, while the illustrated implementation shows an attachment mechanism 445 that is an open box-like structure, those of skill in the art will appreciate that the attachment mechanism 445 can be a circular housing, a socket-type housing, an electrical-connection pad, a conductive pad, or other attachment mechanism that provides for the electrical connection between the navigation sensor 430 and a circuit board or processor of the electronic device.

Figure 5 is a view of the front of an electronic device 500 in accordance with an exemplary implementation is illustrated. As shown in Figure 5, the electronic device 500 can have a full QWERTY keyboard 510. However, the electronic device 500 can also have a reduced QWERTY keyboard (not shown). Each key of the keyboard 510 can be associated with at least one indicia representing an alphabetic character, a numeral, or a command (such as a space command, return command, or the like). The plurality of the keys having alphabetic characters can be arranged in a standard keyboard layout. This standard keyboard layout can be a QWERTY layout (as shown in Figure 5), a QZERTY layout, a QWERTZ layout, an AZERTY layout, a Dvorak layout, a Russian keyboard layout, a Chinese keyboard layout, or other similar layout. These standard layouts are provided by way of example only and other similar standard layouts are considered within the scope of this disclosure. The keyboard layout can be based on the geographical region in which the handheld electronic device is intended for sale. In some examples, the keyboard can be interchangeable such that the user can switch between layouts. In other examples, the keyboard is a virtual keyboard provided on a touch screen display (not shown).

As may be appreciated from Figure 5, the electronic device 500 can have a display 520 located above the keyboard 510 constituting a user input and suitable for accommodating textual input to the electronic device 500. The front face 530 of the electronic device 500 can have a navigation row 540. As shown, the electronic device 500 can be of a unibody construction, also known as a "candy-bar" design, wherein the screen and keypad are all on one face. In alternate embodiments, the electronic device 500 can be a "clamshell" or "flip" design, in which two or more sections are connected by a hinge, or a "slider" design, in which two or more sections slide past each other on rails.

As can be seen from Figure 5, the electronic device 500 can include an auxiliary input such as a cursor navigation tool 550 and which can be also exteriorly located upon the front face 530 of the electronic device 500. The front face location of the navigation tool 550 can allow the navigation tool 550 to be easily thumb-actuable or finger-actuable like the keys of the keyboard 510. One exemplary implementation of the navigation tool 550 can be an optical navigation device 100 having one or more sensors, such as a capacitive sensor, optical sensor, or both, which can be utilized to instruct two-dimensional or three-dimensional screen cursor movement in substantially any direction, as well as act as an actuator when the optical navigation device 100 is depressed like a button. The placement of the navigation tool 550 may be above the keyboard 510 and below the display screen 520; in this position, it can avoid interference during keyboarding and does not block the operator's view of the display screen 520 during use, for example, as shown in Figure 5.

The electronic device 500 can be configured to send and receive messages. The electronic device 500 includes a body 560 which can, in some embodiments, be configured to be held in one hand by an operator of the electronic device 500 during text entry. The display 520 is included which is located on the front face 530 of the body 560 and upon which information is displayed to the operator during text entry. The electronic device 500 can also be configured to send and receive voice communications such as electronic telephone calls. The electronic device 500 can also include a camera (not shown) to allow the user to take electronic photographs which can be referred to as photos or pictures.

The present disclosure described herein pertains to a surface mountable navigation device with tactile response. The described implementations are to be considered in all respects only as illustrative and not restrictive. While illustrative embodiments have been described above, it will be appreciated that various changes and modifications may be made. Those of skill in the art will also appreciate that the elements and features illustrated in the implementations described and illustrated in the figures herein can be optionally included to achieve the benefits of the presently disclosed surface mountable navigation device with tactile response. Additionally, those skilled in the art will appreciate that features in each of he figured described herein can be combined with one another and arrange to achieve the described benefits of the presently disclosed surface mountable navigation device with tactile response. Various modifications to and departures from the disclosed implementations will occur to those having skill in the art. The subject matter that is intended to be within the scope of this disclosure is set forth in the following claims.

## Claims

1. A navigation device (100) comprising:
a navigation sensor (120);
a flexible coupling component (130) including a first end (132) and a second end (138) opposite the first end (132);
the first end (132) of the flexible coupling component (130) being coupled to the navigation sensor (120) and the second end (138) including a conductive member (310); and
wherein the flexible coupling component (130) is capable of being folded at least partially on itself so that the first end (132) is above the second end (138).

2. The navigation device as recited in any one of the preceding claims, further comprising a depressible switch (150) coupled to the flexible coupling component (130) and located between a vertical arrangement of the first end (132) and the second end (138) when the flexible coupling component is folded.

3. The navigation device as recited in any one of the preceding claims, wherein the flexible coupling component (130) is a flexible printed circuit.

4. The navigation device as recited in any one of the preceding claims, further comprising a rigid circuit board (160) couplable at about the second end (138) of the flexible coupling component (130).

5. The navigation device as recited in claim 4, wherein the conductive member (310) is couplable to the rigid circuit board (160).

6. The navigation device as recited in claim 4, wherein the rigid circuit board (160) is couplable to the flexible coupling component (130) by one of soldering, adhesion, and anisotropic conductive film bonding.

7. The navigation device as recited in any one of the preceding claims, wherein the conductive member (310) comprises a plurality of conductor pads.

8. The navigation device as recited in claim 6, wherein the plurality of conductor pads (310) are integrated into the second end (138).

9. The navigation device as recited in any one of claims 7 or 8, wherein the plurality of conductor pads (310) are one of recessed pads or protruding pads.

10. The navigation device as recited in any one of the preceding claims, wherein the conductive member (310) comprises a housing (445) having a plurality of conductor pins (440).

11. The navigation device as recited in any one of the preceding claims, further comprising a cover (140) that is one of EMF shielded or RF shielded.

12. The navigation device as recited in any one of the preceding claims, wherein the first end (132) has an upper surface and a lower surface and the second end (138) has an upper surface and a lower surface, the lower surface of the first end (132) facing the upper surface of the second end (138) when the flexible coupling component is folded.

13. The navigation device as recited in claim 12, wherein the lower surface of the first end (132) is substantially parallel with the upper surface of the second end (138) when the flexible coupling component is folded.

14. The navigation device as recited in any one of the preceding claims, further comprising a fingerprint sensor (120) communicatively coupled to the flexible coupling component (130).

15. An electronic device comprising:
a circuit board (160); and
the navigation device (100) as recited in any one of the preceding claims coupled to the circuit board (160).
